# EUROPEAN PATENT APPLICATION

(11) **EP 4 349 915 A1**
(43) Date of publication of application: **10.04.2024**
(21) Application number: 22811028.4
(22) Date of filing: 31.03.2022
(51) Int. Cl.: C08L 83/05, C08L 83/06, C08L 83/07, C08K 3/22, C08K 3/28

(54) **HEAT-CONDUCTIVE SILICONE COMPOSITION**

(30) Priority: 26.05.2021 JP 2021088397
(71) Applicant: SHIN-ETSU CHEMICAL CO., LTD., Tokyo 1000005 (JP)
(72) Inventor: ITO Takanori, Annaka-shi, Gunma 379-0224 (JP); MIYANO Megumi, Annaka-shi, Gunma 379-0224 (JP); TSUKADA Junichi, Annaka-shi, Gunma 379-0224 (JP); ISHIHARA Yasuhisa, Annaka-shi, Gunma 379-0224 (JP); ENDO Akihiro, Annaka-shi, Gunma 379-0224 (JP); HIRONAKA Yuya, Annaka-shi, Gunma 379-0224 (JP)
(74) Representative: Cabinet Nony
(86) International application number: PCT/JP2022/016513
(87) International publication number: WO 2022/249754

(57) **Abstract**

[Problem]

One object of the present invention is to provide a thermally conductive silicone composition in which an increase in viscosity is suppressed when a thermally conductive filler is filled with a high amount level, and a thermally conductive silicone cured product having good thermal conductivity and excellent handling properties.

[Solution]

A thermally conductive silicone composition comprising the following components (A) to (F): (A) an organopolysiloxane having at least two alkenyl groups each bonded to a silicon atom: 100 parts by mass; (B) an organohydrogenpolysiloxane having at least two hydrogen atoms each bonded to a silicon atom in an amount such that a ratio of the number of the hydrogen atom bonded to a silicon atom to the number of the alkenyl group in component (A) is 0.1 to 2; (C) a thermally conductive filler: 4,000 to 7,000 parts by mass; (D) a platinum group metal-based catalyst: a catalyst amount; (E) an addition reaction control agent: 0.01 to 1 part by mass; and (F) a dimethylpolysiloxane having a trialkoxysilyl group at one end of a molecular chain and represented by the formula (1): 100 to 300 parts by mass: wherein R⁵ is, independently of each other, an alkyl group having 1 to 6 carbon atoms and c is an integer of 5 to 100, wherein the thermally conductive filler (C) comprises, relative to a total mass of component (C), 20 to 50 mass% of aluminum nitride (C1) having a volume median diameter in the range of 50 µm or more and less than 120 µm, 20 to 40 mass% of alumina (C2) having a volume median diameter in the range of 1 µm or more and less than 5 µm, and 2 to 10 mass% of alumina (C3) having a volume median diameter in the range of 0.1 µm or more and less than 1 µm.

## Description

### TECHNICAL FIELD

The present invention relates to a thermally conductive silicone composition, and more specifically relates to a thermally conductive silicone composition that can be used as a heat transfer material suitably used at the interface between the thermal interface of a heat-generating electronic component and a heat-dissipating component, such as a heat sink or a circuit board, for cooling the electronic component by heat conduction, for example, a thermally conductive resin compound and a thermally conductive resin molded product placed between heat-generating and heat-dissipating components in an electronic device and used to dissipate heat.

### BACKGROUND ART

LSI chips, such as CPUs, driver ICs, and memories, used in personal computers, mobile phones, and other electronic devices generate a large amount of heat as they become higher performance, faster, more compact, and more integrated, and the rise in chip temperature caused by the generated heat leads to chip malfunction and destruction. Therefore, many heat dissipation methods, as well as heat dissipation components used in those methods, have been proposed to suppress the rise in chip temperature during operation.

Conventionally, heat sinks using metal plates with high thermal conductivity, such as aluminum or copper, have been used in electronic devices and the like to suppress the rise in chip temperature during operation. Such heat sinks conduct heat generated by the chip and release the heat from the surface due to the difference in temperature with the outside air.

In order to efficiently transfer the heat generated from the chip to the heat sink, the heat sink must be adhered tightly to the chip, however due to the difference in height of each chip and the tolerance caused by assembly processing, a flexible sheet or grease is interposed between the chip and the heat sink to achieve heat transfer from the chip to the heat sink through the sheet or grease.

While grease-like heat dissipation materials offer low heat resistance due to thinner films, they are difficult to manage. The coating process can be conducted manually by screen printing or extrusion from a syringe, or automatically using a dispensing device, however, since this process takes a lot of time and is not easy to handle, it may be the rate-limiting factor in the product assembly process in some cases.

Sheets have superior handling properties compared to grease, and thermally conductive sheets formed of thermally conductive silicone rubber or the like (thermally conductive silicone rubber sheets) have been used in various fields. In particular, thermally conductive sheets with low hardness can follow well to the unevenness between elements, such as CPUs, due to their shape flexibility, and are advantageous in that they enable efficient heat dissipation without interfering with making devices, such as portable notebook personal computers, more compact.

Moreover, in recent years, the high integration of heat generating elements, especially for use in 5G communication base stations, servers, SSDs, and optical transceivers has been accelerating more and more, and the amount of heat generated by these elements tends to increase, so that heat dispersion sheets with a low hardness and high thermal conductivity are required as heat dissipation measures.

In general, for providing high thermal conductivity, it is necessary to fill a large amount of thermally conductive fillers to silicone resins, but the large amount of filler reduces compressibility and reliability. Therefore, in order to achieve higher thermal conductivity with a lower filling volume, examples have been reported using high thermally conductive fillers, such as boron nitride and aluminum nitride, for insulation applications. However, some kinds of boron nitride have a scale-like shape, the particles lie down when filled into a silicone resin and, therefore, it is difficult to achieve high thermal conductivity in the a-axis direction. Therefore, special treatment is required to fill the boron nitride particles in an upright position.

Thus, various heat dissipation materials have been reported in which aluminum nitride is selected as the high thermally conductive filler (Patent Literatures 1 to 4). It is known that aluminum nitride, particularly in the case of those with a spherical particle diameter, can be easily filled to a high level, and that thermal conductivity can be ensured by increasing the contact area between particles. However, such spherical particles are disadvantageous in that they have a higher cost than that of crushed particles. Further, filling a large amount of aluminum nitride into a resin composition causes increase of viscosity and, thereby, there is a problem in which the molding processability of the material becomes poor.

Japanese Patent Application Laid-Open No. 2010-235842 (Patent Literature 5) describes that an example of combining anisotropic aluminum nitride, which is superior to spherical particles in terms of cost, and isotropic (spherical) alumina to suppress the increase in viscosity of a resin composition, thereby obtaining a high thermally conductive molded product. However, a proper surface treatment agent is not used, and filling a high amount of fillers is difficult, and the achieved thermal conductivity is only 4 W/m·K or less, so that there is room for improvement in terms of thermal conductivity.

In contrast, Japanese Patent Application Laid-Open No. 2017-088696 (Patent Literature 6) describes a thermally conductive material that has excellent molding processability by combining aluminum nitride having an average particle size of 0.5 to 10 µm, magnesia having a Mohs hardness of 5 or more and 7 or less, and zinc oxide, and specifying the mixing ratio thereof. However, aluminum nitride having a small particle size has been used from the viewpoint of reducing the viscosity of the composition and, thereby, thermally conductive silicone compositions exceeding 10 W/m·K are not obtained.

### PRIOR LITERATURES

### [Patent Literatures]

Patent Literature 1: Japanese Patent Application Laid-Open No. Hei3-14873/1991
Patent Literature 2: Japanese Patent Application Laid-Open No. Hei 3-295863/1991
Patent Literature 3: Japanese Patent Application Laid-Open No. Hei 6-164174/1994
Patent Literature 4: Japanese Patent Application Laid-Open No. Hei 11-49958/1999
Patent Literature 5: Japanese Patent Application Laid-Open No. 2010-235842
Patent Literature 6: Japanese Patent Application Laid-Open No. 2017-088696

### DISCLOSURE OF THE INVENTION

### PROBLEMS TO BE SOLVED BY THE INVENTION

The present invention was made in view of the above circumstances, and one object of the present invention is to provide a thermally conductive silicone composition in which an increase in viscosity is suppressed when a thermally conductive filler is filled with a high amount level, and a thermally conductive silicone cured product having good thermal conductivity and excellent handling properties.

### SOLUTIONS TO THE PROBLEMS

The present inventors have made research to solve the aforesaid problems and found that a thermally conductive silicone cured product having good thermal conductivity and excellent handling properties is obtained by combining aluminum nitride and alumina, each having a specific volume median diameter, at a specific mixing ratio, and filling them into an addition reaction-curable silicone resin composition with a high amount and, thereby, arriving at the present invention.

That is, the present invention provides a thermally conductive silicone composition comprising the following components (A) to (F):
(A) an organopolysiloxane having at least two alkenyl groups each bonded to a silicon atom: 100 parts by mass;
(B) an organohydrogenpolysiloxane having at least two hydrogen atoms each bonded to a silicon atom in an amount such that the ratio of the number of the hydrogen atom bonded to a silicon atom to the number of alkenyl groups in component (A) is 0.1 to 2;
(C) a thermally conductive filler: 4,000 to 7,000 parts by mass;
(D) a platinum group metal-based catalyst: a catalyst amount;
(E) an addition reaction control agent: 0.01 to 1 part by mass; and
(F) a dimethylpolysiloxane having a trialkoxysilyl group at one end of a molecular chain and represented by the following formula (1): 100 to 300 parts by mass: 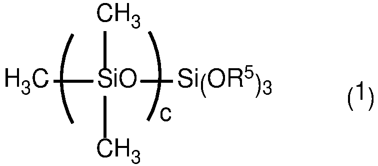
   wherein R⁵ is, independently of each other, an alkyl group having 1 to 6 carbon atoms and c is an integer of 5 to 100,
   wherein the thermally conductive filler (C) comprises, relative to the total mass of component (C), 20 to 50 mass% of aluminum nitride (C1) having a volume median diameter in the range of 50 µm or more and less than 120 µm, 20 to 40 mass% of alumina (C2) having a volume median diameter in the range of 1 µm or more and less than 5 µm, and 2 to 10 mass% of alumina (C3) having a volume median diameter in the range of 0.1 µm or more and less than 1 µm.

Further, the present invention provides a cured product obtained by curing the above thermally conductive silicone composition, and a thermally conductive silicone heat dispersion sheet including the cured product.

### EFFECTS OF THE INVENTION

Since the thermally conductive silicone composition of the present invention can include a high amount of a thermally conductive filler and has excellent molding processability, it is possible to provide molded products having excellent thermal conductivity without the need for special equipment.

### DESCRIPTION OF PREFERRED EMBODIMENTS

The present invention will be described in more detail below.

### [Alkenyl group-containing organopolysiloxane]

The alkenyl group-containing organopolysiloxane, which is component (A), is an organopolysiloxane having two or more alkenyl groups each bonded to a silicon atom in one molecule and serves as a main agent of the composition of the present invention. The alkenyl group-containing organopolysiloxane may be a linear organopolysiloxane having a main chain consisting essentially of repeating diorganosiloxane units, but it may also contain a branched structure as part of the molecular structure or may be a cyclic body. A linear diorganopolysiloxane is preferred in terms of physical properties, such as mechanical strength, of the cured products.

Functional groups other than alkenyl groups bonded to silicon atoms are unsubstituted or substituted monovalent hydrocarbon groups, preferably unsubstituted or substituted monovalent hydrocarbon groups having 1 to 10 carbon atoms, and particularly preferably 1 to 6 carbon atoms. Examples thereof include alkyl groups, such as methyl, ethyl, propyl, isopropyl, butyl, isobutyl, tert-butyl, pentyl, neopentyl, hexyl, heptyl, octyl, nonyl, decyl, and dodecyl groups; cycloalkyl groups, such as cyclopentyl, cyclohexyl, and cycloheptyl groups; aryl groups, such as phenyl, tolyl, xylyl, naphthyl, and biphenylyl groups; aralkyl groups, such as benzyl, phenylethyl, phenylpropyl, and methylbenzyl groups; and groups in which some or all of the hydrogen atoms to which carbon atoms are bonded in these groups are substituted with halogen atoms such as fluorine, chlorine, or bromine, cyano groups, or the like, for example, chloromethyl, 2-bromoethyl, 3-chloropropyl, 3,3,3-trifluoropropyl, chlorophenyl, fluorophenyl, cyanoethyl, and 3,3,4,4,5,5,6,6,6-nonafluorohexyl groups. More preferred are unsubstituted or substituted alkyl groups having 1 to 3 carbon atoms, such as methyl, ethyl, propyl, chloromethyl, bromoethyl, 3,3,3-trifluoropropyl, and cyanoethyl groups; and unsubstituted or substituted phenyl groups, such as phenyl, chlorophenyl, and fluorophenyl groups. Further, functional groups other than alkenyl groups bonded to silicon atoms are not limited to all being identical.

Further, examples of alkenyl groups include those having 2 to 8 carbon atoms, such as vinyl, allyl, propenyl, isopropenyl, butenyl, hexenyl, and cyclohexenyl groups. Preferred among these are lower alkenyl groups, such as vinyl and allyl groups, and particularly preferred is a vinyl group. It is sufficient for component (A) to have two or more alkenyl groups each bonded to a silicon atom in one molecule.

The organopolysiloxane generally has a kinematic viscosity at 25°C in the range of 10 to 100,000 mm²/s, and particularly preferably in the range of 500 to 50,000 mm²/s. If the viscosity is too low, the obtained composition may have poor storage stability, while if the viscosity is too high, the obtained composition may have poor extensibility. The organopolysiloxane of component (A) may be used singly or in combination of two or more with different viscosities. In the present invention, the kinematic viscosity of the organopolysiloxane may be measured with an Ostwald viscometer at 25°C.

The organopolysiloxane is more preferably represented by the following formula:

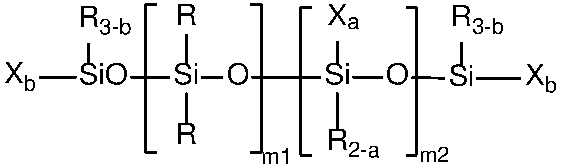

In the above formula, X is an alkenyl group having 2 to 8 carbon atoms, R is, independently of each other, an unsubstituted or substituted monovalent hydrocarbon group having 1 to 10 carbon atoms other than alkenyl groups, m1 is an integer of 1 or more, m2 is an integer of 0 or more, m1 and m2 are integers in which the kinematic viscosity at 25°C of the above organopolysiloxane is in the range of 10 to 100,000 mm²/s, and particularly preferably 500 to 50,000 mm²/s, a is 1 or 2, and each b is 0 or 1, provided that the above formula has two or more groups represented by X. Preferably, m2 is 0 and the both of b is 1.

### [Organohydrogenpolysiloxane]

Component (B) is an organohydrogenpolysiloxane having an average of 2 or more, and preferably 2 to 100, hydrogen atom directly bonded to a silicon atom (SiH) in one molecule and functions as a crosslinking agent for component (A). That is, SiH in component (B) and alkenyl groups in component (A) undergo a hydrosilylation reaction in the presence of a later-described platinum group catalyst (D) to provide a crosslinked three-dimensional network structure. Further, if the number of Si-H groups is less than 1 on average, the silicone composition may not cure.

The above organohydrogenpolysiloxane is represented, for example, by the following average structural formula: 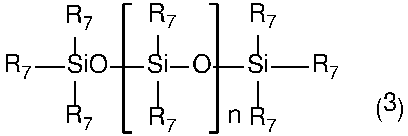 In formula (3), R₇ is, independently of each other, a hydrogen atom or an unsubstituted or substituted monovalent hydrocarbon group free from an aliphatic unsaturated bond, provided that at least two of R₇ are hydrogen atoms, and n is an integer of 1 or more, preferably an integer of 2 to 100, and more preferably an integer of 5 to 50. Formula (3) may have the hydrogen atom directly bonded to a silicon atom either in the side chain or at the end. Preferably, at least two R₇ in the side chain are hydrogen atoms.

In formula (3), the unsubstituted or substituted monovalent hydrocarbon group free from an aliphatic unsaturated bond, represented by R₇, is preferably a monovalent hydrocarbon group having 1 to 10 carbon atoms, and particularly preferably 1 to 6 carbon atoms. Examples thereof include alkyl groups, such as methyl, ethyl, propyl, isopropyl, butyl, isobutyl, tert-butyl, pentyl, neopentyl, hexyl, heptyl, octyl, nonyl, decyl, and dodecyl groups; cycloalkyl groups, such as cyclopentyl, cyclohexyl, and cycloheptyl groups; aryl groups, such as phenyl, tolyl, xylyl, naphthyl, and biphenylyl groups; aralkyl groups, such as benzyl, phenylethyl, phenylpropyl, and methylbenzyl groups; and groups in which some or all of the hydrogen atoms to which carbon atoms are bonded in these groups are substituted with halogen atoms such as fluorine, chlorine, or bromine, cyano groups, or the like, for example, chloromethyl, 2-bromoethyl, 3-chloropropyl, 3,3,3-trifluoropropyl, chlorophenyl, fluorophenyl, cyanoethyl, and 3,3,4,4,5,5,6,6,6-nonafluorohexyl groups. Preferred are unsubstituted or substituted alkyl groups having 1 to 3 carbon atoms, such as methyl, ethyl, propyl, chloromethyl, bromoethyl, 3,3,3-trifluoropropyl, and cyanoethyl groups; and unsubstituted or substituted phenyl groups, such as phenyl, chlorophenyl, and fluorophenyl groups. Further, R₇ is not limited by all being identical.

The amount of component (B) is such that the ratio of the number of SiH groups in component (B) to the number of alkenyl groups in the above component (A) is 0.1 to 2, preferably 0.3 to 1.5, and more preferably 0.5 to 1. If the amount of component (B) is less than the above lower limit value, the silicone resin composition may not be cured, and the obtained cured product may not be strong enough to hold its shape as a molded product and may not be handled. If the amount of component (B) exceeds the above upper limit value, flexibility of the cured product is lost and heat resistance increases significantly, which is not preferable.

### [Thermally conductive filler]

Component (C) is a thermally conductive filler. The present invention is characterized by having aluminum nitride and alumina, each having a specific particle size, at a specific mixing ratio as the thermally conductive filler (C).

The mixing ratio of aluminum nitride and alumina, that is, the ratio of (C1) aluminum nitride having a volume median diameter (D₅₀) in the range of 50 µm or more and less than 120 µm is 20 to 50 mass%, the ratio of (C2) alumina having a volume median diameter (D₅₀) in the range of 1 µm or more and less than 5 µm is 20 to 40 mass%, and the ratio of (C3) alumina having a volume median diameter (D₅₀) in the range of 0.1 µm or more and less than 1 µm is 2 to 10 mass%, relative to the total mass of component (C).

The mixing ratio of the aluminum nitride (C1) is preferably 25 to 45 mass% relative to the total mass of component (C). If the mixing amount of the aluminum nitride is less than the above lower limit value, the obtained cured product has lowered thermal conductivity, while if the mixing amount of the aluminum nitride exceeds the above upper limit value, the viscosity of the thermally conductive silicone composition increases, and moldability of the cured product worsens.

The aluminum nitride (C1) is characterized by having a volume median diameter in the range of 50 µm or more and less than 120 µm. Preferably, the volume median diameter is in the range of 55 to 110 µm, and more preferably in the range of 60 to 100 µm. If the particle size of the aluminum nitride is larger than the above upper limit value, the obtained composition has poor extensibility and is difficult to mold. Further, the aluminum nitride is difficult to disperse uniformly with other thermally conductive filler and hardly effective in increasing thermal conductivity. If the particle size of the aluminum nitride is less than the above lower limit value, it is difficult to obtain the desired high thermally conductive composition. The component (C1) may be one kind of aluminum nitride having a volume median diameter in the above range or a mixture of two or more kinds. In the present invention, the volume median diameter refers to the median diameter (D₅₀) in volume-based particle size distribution by a laser diffraction scattering method. Note that the volume median diameters described in the present specification are defined by this content.

The silicone composition of the present invention may contain aluminum nitride having a volume median diameter in the ranges of less than 50 µm or 120 µm or more in a small amount, such as 500 or less relative to the total mass of component (C), at an extent that does not impair the effect of the present invention, however an embodiment in which such aluminum nitride is not contained is particularly preferable.

The form of the aluminum nitride used in the present invention is not particularly limited, however a crushed form is preferable in terms of thermal conductivity and cost.

The mixing ratio of the (C2) alumina having a volume median diameter in the range of 1 µm or more and less than 5 µm is preferably 25 to 35 mass% relative to the total mass of component (C). If the mixing ratio is less than the above lower limit value, the viscosity of the thermally conductive silicone composition increases, and moldability of the cured product worsens. If the mixing ratio exceeds the above upper limit value, compatibility of the alumina with the above-mentioned aluminum nitride is poor, so that it is difficult to fill into the composition with a high amount by co-addition. Component (C2) may be one kind of alumina having a volume median diameter in the range of 1 µm or more and less than 5 µm, or a mixture of two or more kinds.

The mixing ratio of the alumina (C3) having a volume median diameter in the range of 0.1 µm or more and less than 1 µm is preferably 4 to 8 mass% relative to the total mass of component (C). By mixing the alumina within this range, it is possible to obtain the effect of closest filling by entering between the aluminum nitride (C1) and the alumina (C2) having a volume median diameter of 1 µm or more and less than 5 µm. If the mixing ratio is outside the range, the effect of closest filling component (C) is poor, thus the viscosity of the composition increases and thermal conductivity decreases. Component (C3) may be one kind of alumina having a volume median diameter in the range of 0.1 µm or more and less than 1 µm, or a mixture of two or more kinds.

The form of the alumina used in the present invention is not particularly limited and may be either spherical or crushed. From the viewpoint of filling properties, it is preferable to include 40 mass% or more of spherical alumina relative to the total mass of alumina. Further, alumina (C4) having a volume median diameter in the range of 5 µm or more, preferably 5 to 100 µm, and more preferably 7 to 90 µm, may be included in an amount of 58 mass% or less, preferably 1 to 50 mass%, and more preferably 10 to 35 mass%, relative to the total mass of component (C).

The mixing amount of component (C) is 4,000 to 7,000 parts by mass, and preferably 4,500 to 6,500 parts by mass, relative to 100 parts by mass of component (A). If the amount of the thermally conductive filler is less than the above lower limit value, the obtained silicone resin composition becomes poor in thermal conductivity, and the composition may have inferior storage stability. Further, if the amount of the thermally conductive filler exceeds the above upper limit value, the composition has poor extensibility and the obtained cured product may decrease in strength, thus handling as a cured product will be difficult, which is not preferable.

### [Platinum group metal-based catalyst]

Component (D) is an addition reaction catalyst that promotes the addition reaction between alkenyl groups in component (A) and SiH groups in component (B). A well-known platinum group metal-based catalyst used for hydrosilylation reactions may be used as the catalyst. Examples thereof include platinum group metals such as platinum (including platinum black), rhodium, and palladium; platinum chlorides, chloroplatinic acids, and platinum chloride salts such as H₂PtCl₄·nH₂O, H₂PtCl₆·nH₂O, NaHPtCl₆·nH₂O, KaHPtCl₆·nH₂O, Na₂PtCl₆·nH₂O, K₂PtCl₄·nH₂O, PtCl₄·nH₂O, PtCl₂, and Na₂HPtCl₄·nH₂O (provided that in these formulas, n is an integer of 0 to 6, and preferably 0 or 6); alcohol-modified chloroplatinic acid (see specification of U.S. Patent No. 3,220,972), chloroplatinic acid-olefin complexes (see specifications of U.S. Patent No. 3,159,601, U.S. Patent No. 3,159,662, and U.S. Patent No. 3,775,452); platinum group metals, such as platinum black and palladium, supported on carriers, such as alumina, silica, or carbon; rhodium-olefin complexes; chlorotris(triphenylphosphine)rhodium (Wilkinson's catalyst); complexes of platinum chlorides, chloroplatinic acids, or chloroplatinic acid salts with vinyl group-containing siloxanes, particularly vinyl group-containing cyclic siloxanes, and the like. The amount of component (D) may be a so-called catalyst amount (i.e., an effective amount to proceed the above addition reaction). In general, the amount of component (D) is 0.1 to 1,000 ppm in terms of volume of platinum group metal element, relative to component (A).

### [Addition reaction control agent]

The thermally conductive silicone composition of the present invention contains an addition reaction control agent (E). Component (E) may be a known addition reaction control agent used for addition reaction-curable silicone compositions and is not particularly limited. Examples thereof include acetylene compounds, such as 1-ethynyl-1-hexanol and 3-butyn-1-ol, various nitrogen compounds, organic phosphorus compounds, oxime compounds, organic chloro compounds, and the like. The amount of component (E) may be an effective amount able to control the above addition reaction. In general, the amount of component (E) is 0.01 to 1 part by mass, and preferably 0.05 to 0.5 parts by mass, related to 100 parts by mass of component (A).

### [Surface treatment agent]

The silicone resin composition of the present invention further contains (F) a dimethylpolysiloxane having a trialkoxysilyl group at one end of a molecular chain and represented by the following formula (1). Component (F) functions as a surface treatment agent for uniformly dispersing the thermally conductive filler (C) in a matrix made of the organosiloxane (A) during preparation of the composition.

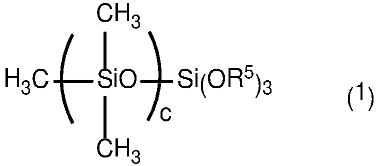

In formula (1), R⁵ is, independently of each other, an alkyl group having 1 to 6 carbon atoms, and c is an integer of 5 to 100. Examples of alkyl groups having 1 to 6 carbon atoms include methyl, ethyl, propyl, isopropyl, butyl, isobutyl, tert-butyl, pentyl, neopentyl, and hexyl groups. R⁵ is preferably an alkyl group having 1 to 3 carbon atoms, such as a methyl, ethyl, or propyl group, and more preferably a methyl group.

The amount of component (F) is 100 to 300 parts by mass, and preferably 150 to 250 parts by mass, relative to 100 parts by mass of component (A). By containing component (F) within this range, the thermally conductive filler may be uniformly dispersed in the matrix made of organosiloxane. A high ratio of component (F) to component (A) may induce oil separation, which is not preferable. Further, if the ratio of component (F) is small, wettability of the polyorganosiloxane and the thermally conductive filler may decrease, making it not possible to form a composition.

### [Plasticizer]

The composition of the present invention may further contain, as a plasticizer (G), an organopolysiloxane represented by the following formula (2):

R⁶-(SiR⁶₂O)_{d}SiR⁶₃ (2)

wherein R⁶ are, independently of each other, a monovalent hydrocarbon group having 1 to 10 carbon atoms, free from an aliphatic unsaturated bond, and d is an integer of 5 to 2,000,
and having a kinematic viscosity at 25°C of 10 to 100,000 mm²/s. This component may be contained as appropriate to impart the properties of a viscosity modifier for the thermally conductive composition and is not particularly limited. One kind may be used alone, or two or more kinds may be used in combination. Note that the compound represented by the above formula (2) can also act as an internal release agent, as well as a plasticizer, when containing Ph groups at a certain amount.

The above R⁶ are, independently of each other, a monovalent hydrocarbon group having 1 to 10 carbon atoms free from an aliphatic unsaturated bond. Examples thereof include alkyl groups, such as methyl, ethyl, propyl, isopropyl, butyl, isobutyl, tert-butyl, pentyl, neopentyl, hexyl, heptyl, and octyl groups; cycloalkyl groups, such as cyclopentyl, cyclohexyl, and cycloheptyl groups; aryl groups such as phenyl, tolyl, and xylyl groups; aralkyl groups, such as benzyl, phenylethyl, phenylpropyl, and methylbenzyl groups; and groups in which some or all of the hydrogen atoms to which carbon atoms are bonded in these groups are substituted with halogen atoms such as fluorine, chlorine, or bromine, cyano groups, or the like, for example, chloromethyl, 2-bromoethyl, 3-chloropropyl, 3,3,3-trifluoropropyl, chlorophenyl, fluorophenyl, cyanoethyl, and 3,3,4,4,5,5,6,6,6-nonafluorohexyl groups. Typical examples include monovalent hydrocarbon groups having 1 to 10 carbon atoms, and particularly typically 1 to 6 carbon atoms, and preferred are unsubstituted or substituted alkyl groups having 1 to 3 carbon atoms, such as methyl, ethyl, propyl, chloromethyl, bromoethyl, 3,3,3-trifluoropropyl, and cyanoethyl groups; and unsubstituted or substituted phenyl groups, such as phenyl, chlorophenyl, and fluorophenyl groups. R⁶ are particularly preferably methyl and phenyl groups.

The kinematic viscosity at 25°C of the above organopolysiloxane may be preferably 10 to 100,000 mm²/s, and particularly preferably 100 to 10,000 mm²/s. If the kinematic viscosity is lower than 10 mm²/s, the cured product obtained from the composition is liable to oil bleeding. If the kinematic viscosity is larger than 100,000 mm²/s, the obtained thermally conductive composition may have poor flexibility.

In the above formula (2), d may be any value in which the kinematic viscosity of the organopolysiloxane is in the range described above. Preferably, d is an integer of 5 to 2,000, and more preferably an integer of 10 to 1,000.

The amount of component (G) in the composition of the present invention is not particularly limited and may be an amount in which the desired effect as a plasticizer can be obtained. In general, the amount of component (G) is preferably 1 to 30 parts by mass, and more preferably 5 to 20 parts by mass, relative to 100 parts by mass of component (A). When the amount of the component (G) is within the above range, the thermally conductive composition before curing easily maintains good fluidity and workability, and it becomes easy to fill the composition with the thermally conductive filler, which is component (C).

### [Additives]

The thermally conductive silicone composition of the present invention may further contain known additives such as internal release agents, colorants, and heat resistance improvers such as cerium oxide and titanium oxide.

### [Viscosity of composition]

The viscosity of the thermally conductive silicone composition of the present invention is preferably 3,500 Pa·s or less, and more preferably 3,000 Pa·s or less. In this range, the thermally conductive silicone composition can be discharged by a pump, thus allowing the molding of cured products with high yield. In particular, when the viscosity is 3,000 Pa·s or less, better moldability is achieved, which is preferable. The lower limit of viscosity is not particularly limited, but is generally about 100 Pa·s.

Note that the viscosity can be measured by a capillary rheometer.

### [Method for producing thermally conductive silicone cured product]

The thermally conductive silicone composition of the present invention above can be applied on a substrate, such as a resin film, and cured to obtain a thermally conductive silicone cured product. A film having a heat distortion temperature of 100°C or higher, such as a PET or PBT polycarbonate film, which can withstand heat treatment after bonding, can be appropriately selected and used as the resin film. A coating device such as a post-weighing blade coater, a gravure coater, a kiss-roll coater, a spray coater, or the like is used to apply organohydrogenpolysiloxane oil on a resin film at a uniform thickness.

Curing conditions may be the same as those for known addition reaction-curable silicone rubber compositions, and curing may be conducted at room temperature, or heating may also be conducted if necessary, and curing is preferably conducted at 100°C to 150°C for 1 minute to 1 hour, and more preferably at 120°C for about 10 minutes.

### [Thermal conductivity of cured product]

The thermal conductivity of the thermally conductive silicone cured product of the present invention is desirably 8.5 W/m·K or more, preferably 9.0 W/m·K or more, and more preferably 10.0 W/m·K or more, as measured at 25°C by the hot-disk method. If the thermal conductivity is less than 8.5 W/m·K, it is difficult to apply the thermally conductive silicone cured product to heating elements that generate a large amount of heat and require high heat dissipation, thus limiting the range of application of molded products. While the upper limit is not limited, it is generally 25 W/m·K or less.

### [Hardness of cured product]

The hardness of the thermally conductive silicone cured product of the present invention is desirably 60 or less, preferably 50 or less, and more preferably 40 or less, as measured by an Asker C hardness meter. If the hardness of the molded product is 60 or more, it cannot cling well to the unevenness of the surface of the heat-generating area, thus reducing the heat-dissipating effect. In contrast, if the Asker C hardness is 5 or less, handling may be difficult.

### EXAMPLES

The present invention will be explained below in further detail with reference to a series of the Examples and the Comparative Examples, though the present invention is in no way limited by these Examples. In the following descriptions, the volume median diameter refers to the median diameter (D₅₀) in volume-based particle size distribution by a laser diffraction scattering method.

The components (A) to (G) used in the following Examples and Comparative Examples are as shown below.
Components (A):
   (A-1) An organopolysiloxane having a kinematic viscosity of 400 mm²/s and represented by the following formula (4).
   (A-2) An organopolysiloxane having a kinematic viscosity of 5,000 mm²/s and represented by the following formula (4). 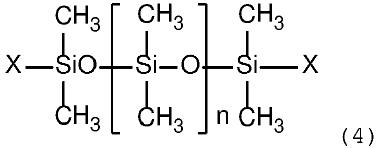 wherein X is a vinyl group, and n is a number that makes the viscosity the above value.
Component (B): An organohydrogenpolysiloxane represented by the following formula: 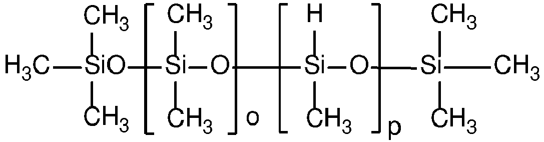 Average degree of polymerization: o = 28 and p = 2 Note that the bonding order of the siloxane units in the parentheses is not limited to the above.
Component (C):
   (C1-1) Crushed aluminum nitride having a volume median diameter of 60 µm
   (C1-2) Crushed aluminum nitride having a volume median diameter of 80 µm
   (C1-3) Crushed aluminum nitride having a volume median diameter of 100 µm
   (C3-4) Spherical alumina having a volume median diameter of 0.3 µm
   (C2-5) Crushed alumina having a volume median diameter of 1 µm
   (C2-6) Spherical alumina having a volume median diameter of 1 µm
   (C4-7) Spherical alumina having a volume median diameter of 7 µm
   (C4-8) Spherical alumina having a volume median diameter of 45 µm
   (C4-9) Spherical alumina having a volume median diameter of 90 µm
Component (D): A solution of 5% chloroplatinic acid in 2-ethylhexanol (addition reaction catalyst)
Component (E): Ethynyl methylidene carbinol (addition reaction control agent)
Component (F): A dimethylpolysiloxane having one end sealed with a trimethoxysilyl group and represented by the following formula: 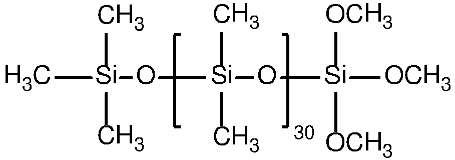
Component (G): A dimethylpolysiloxane represented by the following formula (plasticizer):

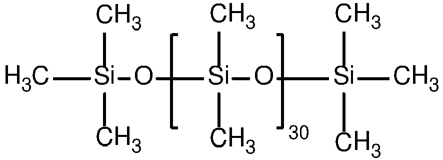

### [Examples 1 to 6 and Comparative Examples 1 to 8]

The mixing amounts of the above components (A) to (G) in each silicone composition are as shown in the following Table 1 or 2.

The above components (A), (C), (F), and (G) were kneaded with a planetary mixer for 60 minutes. The components (D) and (E) were added thereto, an effective amount (5 parts) of an internal release agent represented by the following formula (α) for promoting release from the separator was further added, and the resulting mixture was further kneaded for 60 minutes. Component (B) was further added thereto, and the resulting mixture was kneaded for 30 minutes to obtain a thermally conductive silicone composition. Note that the proportion of the number of hydrogen atoms bonded to silicon atoms in component (B) to the number of alkenyl groups in component (A), i.e., SiH/SiVi, is 1.1.

The internal release agent is shown below.

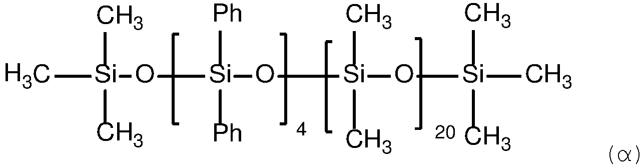

The viscosity of each thermally conductive silicone composition was measured with a constant test force extrusion type capillary rheometer flow tester (CFT-EX, produced by Shimadzu Corporation). The viscosity was calculated from the moving speed of the composition between 3 s to 7 s at 25°C.

Each thermally conductive silicone composition obtained above was held between two PET films, then cured in a press at 120°C for 10 minutes and, thereby, to obtain thermally conductive silicone cured sheets having 1-mm-thickness or 6-mm-thickness, respectively. The obtained cured products were measured for thermal conductivity and specific gravity in accordance with the following methods.

### [Evaluation Methods]

(1) Thermal conductivity of cured products: Two of the 6-mm-thickness of sheets obtained above were used to measure thermal conductivity by a thermal conductivity meter (TPA-501, produced by Kyoto Electronics Manufacturing Co., Ltd.).
(2) Hardness of cured products: Two of the 6-mm-thickness of sheets obtained above were laminated and the hardness was measured by an Asker C hardness meter.
(3) Handling properties of cured products: The 1-mm-thickness of sheet obtained above was cut into 2-cm squares and peeled off, and a case where the sheet could be peeled off from the PET film without tearing was evaluated as "good", while a case where the sheet was torn or excessively deformed due to weak strength was evaluated as "poor".

**[Table 1]**

| Component, part by mass | | Example | | | | | |
|---|---|---|---|---|---|---|---|
| | | 1 | 2 | 3 | 4 | 5 | 6 |
| (A) | (A-1) | 90 | 90 | 90 | 90 | 90 | 90 |
| | (A-2) | 10 | 10 | 10 | 10 | 10 | 10 |
| (B) | | 14 | 14 | 14 | 14 | 14 | 14 |
| (C) | (C1-1) Aluminum nitride, D₅₀=60µm | 850 | 900 | 850 | 850 | 900 | 920 |
| | (C1-2) Aluminum nitride, D₅₀=80µm | 425 | 700 | 425 | 425 | 450 | 460 |
| | (C1-3) Aluminum nitride, D₅₀=100µm | 425 | 700 | 425 | 425 | 450 | 460 |
| | (C3-4) Alumina, D₅₀=0.3µm | 300 | 300 | 300 | 300 | 500 | 250 |
| | (C2-5) Alumina, D₅₀=1µm | 1,100 | 1,100 | 1,100 | 1,100 | 1,200 | 750 |
| | (C2-6) Alumina, D₅₀=1µm | 900 | 900 | 900 | 900 | 800 | 550 |
| | (C4-7) Alumina, D₅₀=7µm | 300 | 300 | 300 | 300 | 350 | 300 |
| | (C4-8) Alumina, D₅₀=45µm | 500 | 200 | 500 | 500 | 500 | 500 |
| | (C4-9) Alumina, D₅₀=90µm | 1,000 | 100 | 1,000 | 1,000 | 1,200 | 800 |
| | (C) Total | 5,800 | 5,200 | 5,800 | 5,800 | 6,350 | 4,990 |
| | Percentage of component (C1), mass % | 29.3 | 44.2 | 29.3 | 29.3 | 28.3 | 36.9 |
| | Percentage of component (C2), mass % | 34.5 | 38.5 | 34.5 | 34.5 | 31.5 | 26.1 |
| | Percentage of component (C3), mass % | 5.2 | 5.8 | 5.2 | 5.2 | 7.9 | 5.0 |
| (D) | | 0.4 | 0.4 | 0.4 | 0.4 | 0.4 | 0.4 |
| (E) | | 0.1 | 0.1 | 0.1 | 0.1 | 0.1 | 0.1 |
| (F) | | 160 | 160 | 250 | 110 | 160 | 160 |
| (G) | | 7 | 7 | 7 | 7 | 7 | 7 |

**[Table 2]**

| Component, part by mass | | Comparative Example | | | | | | | |
|---|---|---|---|---|---|---|---|---|---|
| | | 1 | 2 | 3 | 4 | 5 | 6 | 7 | 8 |
| (A) | (A-1) | 90 | 90 | 90 | 90 | 90 | 90 | 90 | 90 |
| | (A-2) | 10 | 10 | 10 | 10 | 10 | 10 | 10 | 10 |
| (B) | | 14 | 14 | 14 | 14 | 14 | 14 | 14 | 14 |
| (C) | (C1-1) Aluminum nitride, D₅₀=60µm | 850 | 850 | 850 | 850 | 1600 | 400 | 1,200 | 1,100 |
| | (C1-2) Aluminum nitride, D₅₀=80µm | 425 | 425 | 425 | 425 | 800 | 200 | 600 | 550 |
| | (C1-3) Aluminum nitride, D₅₀=100µm | 425 | 425 | 425 | 425 | 800 | 200 | 600 | 550 |
| | (C3-4) Alumina, D₅₀=0.3µm | 900 | 0 | 300 | 300 | 300 | 300 | 400 | 300 |
| | (C2-5) Alumina, D₅₀=1µm | 700 | 1200 | 1500 | 450 | 1,000 | 1,100 | 1,400 | 1,200 |
| | (C2-6) Alumina, D₅₀=1µm | 700 | 1100 | 1300 | 300 | 900 | 1,000 | 1,200 | 1,000 |
| | (C4-7) Alumina, D₅₀=7µm | 300 | 300 | 200 | 800 | 100 | 500 | 500 | 500 |
| | (C4-8) Alumina, D₅₀=45µm | 500 | 500 | 400 | 1,000 | 100 | 800 | 800 | 400 |
| | (C4-9) Alumina, D₅₀=90µm | 1,000 | 1,000 | 400 | 1,250 | 200 | 1,400 | 700 | 800 |
| | (C) Total | 5,800 | 5,800 | 5,800 | 5,800 | 5,800 | 5,900 | 7,400 | 6,400 |
| | Percentage of component (C1), mass % | 29.3 | 29.3 | 29.3 | 29.3 | 55.2 | 13.6 | 32.4 | 34.4 |
| | Percentage of component (C2), mass % | 24.1 | 39.7 | 48.3 | 12.9 | 32.8 | 35.6 | 35.1 | 34.4 |
| | Percentage of component (C3), mass % | 15.5 | 0.0 | 5.2 | 5.2 | 5.2 | 5.1 | 5.4 | 4.7 |
| (D) | | 0.4 | 0.4 | 0.4 | 0.4 | 0.4 | 0.4 | 0.4 | 0.4 |
| (E) | | 0.1 | 0.1 | 0.1 | 0.1 | 0.1 | 0.1 | 0.1 | 0.1 |
| (F) | | 160 | 160 | 160 | 160 | 160 | 160 | 160 | 330 |
| (G) | | 7 | 7 | 7 | 7 | 7 | 7 | 7 | 7 |

**[Table 3]**

| Example | | 1 | 2 | 3 | 4 | 5 | 6 |
|---|---|---|---|---|---|---|---|
| Evaluation | Viscosity of the composition, Pa·s | 2,015 | 1,727 | 1,349 | 2,678 | 2,848 | 1,185 |
| | Thermal conductivity of cured product, W/mK | 10.1 | 10.4 | 8.8 | 10.8 | 11.1 | 8.5 |
| | Hardness of cured product, Asker C | 20 | 22 | 14 | 27 | 30 | 14 |
| | Handling of cured product | Good | Good | Good | Good | Good | Good |

**[Table 4]**

| Comparative Example | | 1 | 2 | 3 | 4 | 5 | 6 | 7 | 8 |
|---|---|---|---|---|---|---|---|---|---|
| Evaluation | Viscosity of the composition, Pa·s | 3,512 | 3,019 | 3,587 | 4,012 | 3,645 | 1,895 | 5,175 | 1,678 |
| | Thermal conductivity of cured product, W/mK | 8.6 | 8.4 | 8.5 | 8.8 | 11.7 | 7.9 | N.D. | 8.9 |
| | Hardness of cured product, Asker C | 25 | 23 | 28 | 32 | 35 | 15 | 49 | 8 |
| | Handling of cured product | Good | Good | Good | Good | Good | Good | Poor | Poor |

As shown in Tables 1 and 3, the thermally conductive silicone compositions of the present invention had excellent moldability as the increase in viscosity due to the thermally conductive filler was suppressed. In addition, the obtained cured products had good thermal conductivity, i.e., a thermal conductivity of 8.5 W/m·K or more, and further, had excellent handling properties.

In contrast, as shown in Tables 2 and 4 above, regarding the compositions of Comparative Examples 1 and 2, the ratio of alumina (C3) having a volume median diameter of 0.1 µm or more and less than 1 µm relative to the total mass of component (C) was outside the range of 2 to 10 wt%, so that the closest filling properties with aluminum nitride and alumina with other particle sizes were reduced, and the viscosity of the thermally conductive silicone compositions increased compared to the composition of Example 1. Therefore, moldability of the composition was inferior and the obtained cured products also had reduced thermal conductivity.

Regarding the compositions of Comparative Examples 3 and 4, similar with the compositions of Comparative Examples 1 and 2, the ratio of the alumina (C2) having a volume median diameter of 1 µm or more and less than 5 µm to the total mass of component (C) was outside the range of 20 to 40 wt%, so that the viscosity of the thermally conductive silicone compositions increased and the obtained cured products had reduced thermal conductivity, compared to the composition of Example 1.

Regarding the composition of Comparative Example 5, the ratio of the aluminum nitride (C1) to the total mass of component (C) was more than 50 wt%. There was no problem with thermal conductivity, however the composition had higher viscosity and inferior moldability compared to the composition of Example 1. On the other hand, regarding Comparative Example 6, the ratio of the aluminum nitride (C1) relative to the total mass of component (C) was less than 20 wt%, so that the obtained cured product had inferior thermal conductivity.

Regarding the composition of Comparative Example 7, the amount of component (C) relative to 100 parts by mass of component (A) was more than 7,000 parts by mass, so that the composition had significantly increased viscosity and inferior moldability. In addition, the obtained cured product was fragile and had inferior handling properties.

Regarding the composition of Comparative Example 8, the amount of component (F) relative to 100 parts by mass of component (A) was more than 300 parts by mass, so that the cured product thereof had inferior strength and handling properties.

### INDUSTRIAL APPLICABILITY

The thermally conductive silicone composition of the present invention can be filled with a high amount of a thermally conductive filler and has excellent molding processability and, therefore, it is possible to provide molded products having excellent thermal conductivity without the need for special equipment. The composition is suitable as a heat transfer material used for cooling electronic components by heat conduction, for example, a thermally conductive resin compound and a thermally conductive resin molded product placed between heat-generating and heat-dissipating components in an electronic device used to dissipate heat.

## Claims

1. A thermally conductive silicone composition comprising the following components (A) to (F):
(A) an organopolysiloxane having at least two alkenyl groups each bonded to a silicon atom: 100 parts by mass;
(B) an organohydrogenpolysiloxane having at least two hydrogen atoms each bonded to a silicon atom in an amount such that a ratio of the number of the hydrogen atom bonded to a silicon atom to the number of the alkenyl group in component (A) is 0.1 to 2;
(C) a thermally conductive filler: 4,000 to 7,000 parts by mass;
(D) a platinum group metal-based catalyst: a catalyst amount;
(E) an addition reaction control agent: 0.01 to 1 part by mass; and
(F) a dimethylpolysiloxane having a trialkoxysilyl group at one end of a molecular chain and represented by the following formula (1): 100 to 300 parts by mass: 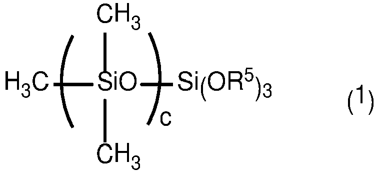
wherein R⁵ is, independently of each other, an alkyl group having 1 to 6 carbon atoms and c is an integer of 5 to 100,
wherein the thermally conductive filler (C) comprises, relative to a total mass of component (C), 20 to 50 mass% of aluminum nitride (C1) having a volume median diameter in the range of 50 µm or more and less than 120 µm, 20 to 40 mass% of alumina (C2) having a volume median diameter in the range of 1 µm or more and less than 5 µm, and 2 to 10 mass% of alumina (C3) having a volume median diameter in the range of 0.1 µm or more and less than 1 µm.

2. The thermally conductive silicone composition according to claim 1, further comprising 1 to 30 parts by mass of (G) an organopolysiloxane represented by the following general formula (2):
R⁶-(SiR⁶₂O)_{d}SiR⁶₃ (2)
wherein R⁶ is, independently of each other, a monovalent hydrocarbon group having 1 to 8 carbon atoms, free from an aliphatic unsaturated bond, and d is an integer of 5 to 2,000,
and having a kinematic viscosity at 25°C of 10 to 100,000 mm²/s.

3. The thermally conductive silicone composition according to claim 1 or 2, further comprising alumina (C4) having a volume median diameter in the range of 5 µm or more to 100 µm or less in an amount of 58 mass% or less, relative to the total mass of component (C).

4. The thermally conductive silicone composition according to any one of claims 1 to 3, wherein component (C1) is a crushed aluminum nitride.

5. The thermally conductive silicone composition according to any one of claims 1 to 4, wherein component (C2) is at least one selected from a spherical alumina and a crushed alumina.

6. The thermally conductive silicone composition according to any one of claims 1 to 5, wherein component (C3) is a spherical alumina.

7. The thermally conductive silicone composition according to any one of claims 1 to 6, having a viscosity of 3,000 Pa·s or less.

8. A cured product composed of curing the thermally conductive silicone composition according to any one of claims 1 to 7.

9. The cured product according to claim 8, having a thermal conductivity of 8.5 W/m·K or more.

10. A thermally-conductive heat-dissipating silicone sheet comprising a PET film and the cured product according to claim 8 or 9.
